(19)

Europäisches Patentamt
European Patent Office
Office européen des brevets

(11) **EP 2 695 527 A1**

(12) **EUROPEAN PATENT APPLICATION**

(43) Date of publication:
**12.02.2014 Bulletin 2014/07**

(21) Application number: **12179668.4**

(22) Date of filing: **08.08.2012**

(51) Int Cl.:
*A23L 1/24* (2006.01)          *A23L 1/39* (2006.01)
*A23L 1/48* (2006.01)          *A23L 1/00* (2006.01)
*A23P 1/16* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Unilever N.V.**
**3013 AL Rotterdam (NL)**

(72) Inventors:
• **Blijdenstein, Theodorus Berend Jan**
**3133 AT Vlaardingen (NL)**

• **Ko, Meliana**
**3133 AT Vlaardingen (NL)**
• **Vreeker, Robert**
**3133 AT Vlaardingen (NL)**

(74) Representative: **van Benthum, Wilhelmus A. J.**
**Unilever Patent Group**
**Olivier van Noortlaan 120**
**3133 AT Vlaardingen (NL)**

(54) **Aerated oil-in-water emulsion composition containing egg yolk fraction and hydrophobin**

(57)      The present invention relates to aerated oil-in-water emulsion compositions containing egg yolk fraction and hydrophobin, and a method for making these compositions. The objective of the invention is to provide aerated emulsions containing egg yolk, that are stable during storage. This is achieved by a composition containing an egg yolk fraction that is enriched in protein, and hydrophobin.

EP 2 695 527 A1

**Description**

The present invention relates to an aerated oil-in-water emulsion composition containing egg yolk fraction and hydrophobin, and a method for making the composition.

**BACKGROUND OF THE INVENTION**

Many food products are aerated, such as mousses, ice cream, and whipped cream. These food products contain small gas bubbles, and the gases may include air, nitrogen, and/or carbondioxide. Aerated food products are being developed with two aspects which are of importance: first the foamability (how easy is it to aerate the food product), and second the stability of the aeration during storage (how well remain the air bubbles remain intact upon storage of the aerated food product).

Hydrophobins are proteins known for their ability to effectively stabilise gas bubbles in food products. The hydrophobins contribute both to foamability and foam stability.

WO 2006/010425 A1 discloses aerated foods containing hydrophobin.

WO 2007/039064 A1 discloses flowable aerated compositions comprising hydrophobin that exhibit reduced creaming of bubbles. WO 2007/087968 A1 discloses emulsions containing hydrophobin. EP 2 052 628 A1 discloses aerated oil-continuous emulsion food products (e.g. spreads, margarine) containing hydrophobin.

WO 2010/136354 A1 and WO 2010/136355 A1 disclose oil-in-water emulsion food products containing hydrophobin, wherein the rate of oxidation of the oil has been reduced.

WO 2008/080737 A1 discloses oil-in-water emulsions containing egg yolk proteins (egg yolk plasma and egg yolk granules). Similarly WO 2008/080738 A1 discloses aerated oil-in-water emulsions containing egg yolk proteins. The foam structure of the these emulsions remains stable during shelf life. Especially egg yolk granules are indicated as ingredients functional to stabilise emulsions and aerated compositions.

WO 2008/138772 A1 discloses the use of egg yolk fractions in frozen aerated compositions.

Paraskevopoulou et al. (Food Hydrocolloids, vol. 9(3), p. 205-209, 1995) describe that egg yolk protein concentrates can be used in foaming of aqueous liquids. The concentrates do not perform better in foamability, and neither in foam stability, than the whole yolk from which they are extracted.

Similarly Paraskevopoulou et al. (Food Hydrocolloids, vol. 11 (4), p. 385-391, 1997) describe defatting of egg yolk using supercritical carbondioxide. In this case the egg yolk concentrate had better foaming properties for foaming of aqueous liquids than the whole yolk from which it was extracted.

Dyer-Hurdon et al. (Journal of Food Science, vol. 58 (6), p. 1277-1281, 1993) describe the influence of various egg yolk fractions on foaming of aqueous compositions with various kitchen salt concentrations. Generally egg yolk plasma had good foaming properties, although these properties were dependent on the salt concentration and also on the starting material from which the plasma was derived.

**SUMMARY OF THE INVENTION**

Many types of emulsions like mayonnaises, light mayonnaises and dressings contain egg yolk, as the standard of identity or food legislation in many countries require the presence of egg yolk in this kind of products. Egg yolk may be present to give taste to these products, as well as to stabilise the emulsions. However, when there is a desire to aerate such emulsions and to to make stable aerated products by using hydrophobin, the presence of the egg yolk has the disadvantage that the stability of the aerated product is reduced. The egg yolk interferes with the stabilising effect of the hydrophobins, and this leads to decreased stability of the aerated product.

Hence it is an objective of the present invention to provide an aerated oil-in-water emulsion that contains egg yolk, and that is stable with respect to the aeration.

This objective has been met by a composition that comprises an egg yolk fraction that is enriched in protein, such that the ratio between protein and phospholipids is at least 10:1.

Accordingly in a first aspect the present invention provides an aerated oil-in-water emulsion composition comprising water, edible oil, egg yolk fraction, and hydrophobin, having a pH ranging from 3 to 6, wherein the composition has an overrun of at least 1%, and wherein the egg yolk fraction comprises protein and phospholipids at a weight ratio of at least 10:1 wt/wt.

In a second aspect the present invention provides a method for preparation of a composition according to the first aspect of the invention, comprising the following steps:

a) emulsifying an edible oil phase into an aqueous phase comprising egg yolk fraction, wherein the egg yolk fraction comprises protein and phospholipids at a weight ratio of at least 10:1 wt/wt and at a pH ranging from 3 to 6; and
b) mix an aerated aqueous composition comprising hydrophobin with the emulsion from step a) to create an aerated composition having an overrun of at least 1%.

In a third aspect the present invention provides use of an egg yolk fraction comprising protein and phospholipids at a weight ratio of at least 10:1 wt/wt for stabilising an aerated oil-in-water emulsion composition comprising water, edible oil, and hydrophobin, having a pH ranging from 3 to 6, having an overrun of at least 1%.

**DETAILED DESCRIPTION**

Unless defined otherwise, all technical and scientific terms used herein have the same meaning as commonly understood by one of ordinary skill in the art.

All percentages, unless otherwise stated, refer to the percentage by weight, with the exception of percentages cited in relation to the overrun.

In the context of the present invention and unless stated otherwise, the average oil droplet diameter or average gas bubble diameter is expressed as the d4,3 value, which is the volume weighted mean diameter. The gas bubbles in a product may not be perfect spheres. The volume based bubble diameter equals the diameter of a sphere that has the same volume as a given bubble.

The term 'aerated' means that gas has been intentionally incorporated into a composition, for example by mechanical means. The gas can be any gas, but is preferably, in the context of food products, a food-grade gas such as air, nitrogen, nitrous oxide, or carbon dioxide. Hence the term 'aeration' is not limited to aeration using air, and encompasses the 'gasification' with other gases as well. The extent of aeration is measured in terms of 'overrun', which is defined as:

$$overrun = \frac{\text{volume of aerated product - volume of initial mix}}{\text{Volume of initial mix}} \times 100\% \qquad (1)$$

where the volumes refer to the volumes of aerated product and unaerated initial mix (from which the product is made). Overrun is measured at atmospheric pressure.

The overrun of an aerated product and the volume fraction of gas in the aerated product generally relate in the following way (with *overrun* in %):

$$volume\ fraction\ gas\ (in\ \%) = 100\ x\ overrun\ /\ (1 + overrun) \qquad (2)$$

After formation, a foam will be vulnerable to coarsening by mechanisms such as creaming, Ostwald ripening and coalescence. By creaming, gas bubbles migrate under the influence of gravity to accumulate at the top of a product. Ostwald ripening or disproportionation refers to the growth of larger bubbles at the expense of smaller ones. Coalescence refers to merging of air bubbles by rupture of the film in between them.

A stable foam or aerated product in the context of the present invention is defined as being stable for at least 30 minutes, more preferred at least an hour, more preferred at least a day, even more preferred at least a week, and most preferred at least a month, and most preferred several months. A stable foam can be defined to be stable with regard to total foam volume, and/or gas bubble size, and looses maximally 20% of its volume during 1 month storage. On the other hand systems may exist which loose more than 20% of their volume during 1 month storage, which nevertheless are considered to have a good stability, as the stability of such foams is much better than comparative foams that do not contain hydrophobins. Foams of which the average  bubble size strongly increases over time are regarded to be less stable than foams of which the average bubble size remains small over time.

Such a foam can be produced by aerating a solution of interest using for example an aerolatte, kenwood mixer, a BA Mixer, an Oakes mixer or a Mondomixer, to a fixed overrun of for example 100%. The foam is then placed into a 100 mL measuring cylinder, stoppered, and stored at 5°C, and the foam volume measured over time.

*Aerated compositions*

In a first aspect the present invention provides an aerated oil-in-water emulsion composition comprising water, edible oil, egg yolk fraction, and hydrophobin, having a pH ranging from 3 to 6, wherein the composition has an overrun of at least 1%, and wherein the egg yolk fraction comprises protein and phospholipids at a weight ratio of at least 10:1 wt/wt.

Normally oil-in-water emulsions like mayonnaises contain whole egg yolk, as according the standard of identity, mayonnaises should contain egg yolk as an ingredient. Aerated mayonnaise-like products are normal mayonnaises which contain a small fraction of air bubbles. The stability of such air bubbles may be impaired by ingredients in the egg yolk, notable the phospholipids. These are surface active, and may compete with other air stabilisers like the hydrophobins.

The composition of the invention does not comprise whole egg yolk, it contains as egg yolk fraction only an egg yolk fraction wherein protein and phospholipids are present at a weight ratio of at least 10:1 wt/wt. The only egg yolk present in the composition of the invention is the egg yolk fraction as defined herein. Preferably the egg yolk fraction comprises protein and phospholipids at a weight ratio of at least 15:1 wt/wt, preferably at least 20:1 wt/wt. This egg yolk fraction can be obtained by partly defatting whole egg yolk, for example by extraction with a solvent like hexane, ethanol, or acetone. Preferably ethanol is used to extract lipid fraction from the whole egg yolk. The lipid fraction of whole egg yolk comprises triglycerides, cholesterol, and phospholipids. When extracting the whole egg yolk, part or all of these lipid compounds are removed from the egg yolk.

Preferably, the egg yolk fraction comprises protein and phospholipids at a weight ratio ranging from 20:1 to 40:1, preferably from 25:1 to 35:1, preferably from 25:1 to 30:1. The concentration of the egg yolk fraction in dry form in the composition of the invention preferably ranges from 0.5% to 4%, preferably from 0.5% to 3%, more preferred from 0.7% to 2.5%, more preferred from 0.9% to 2%, more preferred from 0.9% to 1.8% based on the weight of the composition.

Preferably the egg yolk fraction comprises protein and lipids at a weight ratio of at least 1:1 wt/wt, preferably at least 2:1 wt/wt. More preferred the weight ratio between protein and lipids is at least 4:1 wt/wt, more preferred at least 6:1 wt/wt. In the context of the present invention the term lipids in the egg yolk fraction comprises triglycerides, cholesterol and phospholipids.

Preferably the total concentration of phospholipids in the composition of the invention ranges from 0.015% to 0.075%, preferably from 0.020% to 0.056%, preferably from 0.023% to 0.045% based on the weight of the composition.

Preferably the total concentration of egg yolk protein in the composition of the invention ranges from 0.3% to 1.5%, preferably from 0.49% to 1.4%, preferably from 0.68% to 1.35% based on the weight of the composition. The composition additionally may contain egg white protein or egg albumen protein.

Preferably the pH of the composition according to the invention ranges from 3 to 5, preferably from 3 to 4.5. More preferred, the pH of the composition according to the invention ranges from 3 to 4.3, more preferred from 3 to 4.2, and most preferred from 3.1 to 4.2.

The egg yolk fraction preferably is in dry form before being mixed with other ingredients of the composition of the invention. Preferably the egg yolk fraction is reduced in fatty compounds as compared to whole egg yolk. Preferably the egg yolk fraction in dry form comprises less than 10% water, preferably less than 6% water. Preferably the egg yolk fraction in dry form comprises protein at a concentration of at least 60%, more preferred at least 70%, more preferred at least 75%. Preferably the egg yolk fraction in dry form comprises lipid compounds at a concentration of at most 18%, more preferred at most 15%, more preferred at most 12%. Preferably the egg yolk fraction in dry form comprises phospholipids at a concentration of at most 4%, more preferred at most 3%, more preferred at most 2.8%.

Preferably, the composition of the invention has an overrun of at least 3%, preferably at least 5%, preferably at least 10%, preferably at least 30%. Preferably the emulsion have an overrun of maximally 200%, more preferred maximally 100%. The bubbles present in the aerated composition may have a wide range of sizes, preferably of up to 2,000 micrometer. More preferably the average bubble size d4,3 is smaller than 1,500 micrometer, more preferably the average bubble size d4,3 is smaller than 1,000 micrometer. Preferably the major part of the bubbles is small, hence preferably at least 50% of the gas bubbles has a volume based equivalent diameter of maximally 1,000 micrometer. Preferably at least 75% of the gas bubbles has a volume based equivalent diameter of maximally 1,000 micrometer. Preferably at least 25% of the gas bubbles has a volume based equivalent diameter of maximally 500 micrometer. In some products a small average bubble size is desired, and in that case preferably at least 50% of the gas bubbles has a volume based equivalent diameter of maximally 200 micrometer, and preferably at least 25% of the gas bubbles has a volume based equivalent diameter of maximally 100 micrometer.

Advantages of the composition of the invention are not only that the foamability of the composition improves, but also the foam stability during storage. Foamability can be split in two parts; the first part relates to the ability to reach a high overrun, and the second to the ability to generate small bubbles during aeration. For some applications the presence of small bubbles is an advantage, hence if the average bubble size decreases, this may be considered to be an advantage. Moreover, to keep an aerated product stable during its shelf-life, a good stability of the foam is an advantage. This means that during the shelf-life gas bubbles preferably show coarsening to a limited extent only. Preferably the compositions of the invention show an increase in average bubble size of maximally 20% during storage of 50 days at 5°C, preferably maximally 15% during storage of 50 days at 5°C, most preferred maximally 10% during storage of 50 days at 5°C.

Preferably the amount of edible oil ranges from 5% to 90% by weight of the composition, preferably from 20% to 70% by weight of the composition. More preferred the amount of edible oil ranges from 20% to 60% by weight of the composition, more preferred from 20% to 50%, and more preferred from 20% to 40% by weight of the composition.

Edible oils are generally to be understood mainly to be triglycerides. Triglycerides are commonly known as a glycerol which is esterified with three fatty acids. They may also be called triacylglycerols or TAGs. Fatty acids suitable in the present invention are C3 fatty acids and longer chains, preferably at least C12, up to preferably C26. The aliphatic tail may be saturated or monounsaturated or polyunsaturated. The chain can be unbranched or have branches like a hydroxy, methyl- or ethyl group. In the context of the present invention, triglycerides are understood to be edible oils and fats. As used herein the term 'oil' is used as a generic term for oils and fats either pure or containing compounds in solution. Also the term 'fat' may be used as a generic term for oils and fats either pure or containing compounds in solution. The terms 'fat' and 'oil' are used interchangeably. Where applicable the prefix '*liquid*' or '*solid*' is added to indicate if the fat or oil is liquid or solid at ambient temperature as understood by the person skilled in the art. Oils can also contain particles in suspension. As used herein the term 'fats' is used as a generic term for compounds containing more than 80% triglycerides. They can also contain diglycerides, monoglycerides and free fatty acids. A monoglyceride is an ester of glycerol and one fatty acid, wherein the fatty acid may be as described above. A diglyceride is an ester of glycerol and two fatty acids, wherein the fatty acids may be as described above.

In common language, liquid fats are often referred to as oils but herein the term fats is also used as a generic term for such liquid fats. Fats include: plant oils (for example: allanblackia oil, apricot kernel oil, arachis oil, arnica oil, argan oil, avocado oil, babassu oil, baobab oil, black seed oil, blackberry seed oil, blackcurrant seed oil, blueberry seed oil, borage oil, butter oil, calendula oil, camelina oil, camellia seed oil, castor oil, cherry kernel oil, cocoa butter, coconut oil, corn oil, cottonseed oil, evening primrose oil, grapefruit oil, grape seed oil, hazelnut oil, hempseed oil, illipe butter, jojoba oil, lemon seed oil, lime seed oil, linseed oil, kukui nut oil, macadamia oil, maize oil, mango butter,meadowfoam oil, melon seed oil, moringa oil, mowrah butter, mustard seed oil, olive oil, orange seed oil, palm oil, palm kernel oil, papaya seed oil, passion seed oil, peach kernel oil, plum oil, pomegranate seed oil, poppy seed oil, pumpkins seed oil, rapeseed (or canola) oil, rice bran oil, rosehip oil, safflower oil, seabuckthorn oil, sesame oil, shea butter, soybean oil, sunflower oil, sweet almond oil, walnut oil, wheat germ oil); fish oils (for example: sardine oil, mackerel oil, herring oil, cod-liver oil, oyster oil); animal oils (for example: butter or conjugated linoleic acid, lard or tallow); or any mixture or fraction thereof. The oils and fats may also have been modified by hardening, fractionation, chemical or enzymatical interesterificiation or by a combination of these steps. These fats are preferred for use in the compositions of the invention.

The oil phase of the emulsion prepared in the method of the invention may be liquid at room temperature, or may be solid or partly solid at room temperature, or may be combination of both types of oil. Examples of oils that are liquid at room temperature are sunflower oil, olive oil, rapeseed oil, and other commonly known liquid vegetable oils. Examples of oils that are solid or partly solid at room temperature are coconut oil, dairy fat, and palm oil or palm oil fractions. Dairy fat is of animal origin, and most commonly is sourced from the milk of mammals like cows, sheep, and goats. These fats are preferred for use in the compositions of the invention.

Preferably the edible oil comprises dairy fat, a vegetable oil, or a combination of these. Especially preferred vegetable oils are sunflower oil, soybean oil, rapeseed oil, and canola oil.

Additionally the composition may comprise a hydrocolloid thickener at a at a concentration ranging from 0.1% by weight to 1% by weight based on the weight of the composition. Hydrocolloid thickeners that may be used, are preferably xanthan gum, locust bean gum, guar gum, carrageenan, carboxy methylcellulose, starch, or combinations of these. Xanthan gum, carrageenan, starch and any combination of these thickeners are preferred.

Preferably the compositions of the invention comprise citrus fibres. The citrus fibres preferably originate from lemon, orange or lime, more specifically they preferably originate from the peel of the orange, lemon, or lime. Preferably the concentration of citrus fibres ranges from 0.5 to 10% by weight. Preferably the compositions contain maximally 8% by weight of citrus fibres, more preferred maximally 6% by weight of citrus fibre, based on total weight of the composition. Preferably the citrus fibres are present at a concentration ranging from 1% to 6% by weight, based on the total weight of the composition, more preferred ranging from 1.5% to 6% by weight, most preferred from 2% to 5% by weight based on total weight of the composition.

Preferably the compositions according to the invention contain citrus fibres which are added to the composition as isolated fibres. This means that the fibres have been isolated from a natural source, purified, and possibly other processes have been carried out, in order to give the fibres a good functionality in the compositions (with regard to providing for example a good structure of the composition). Hence preferably the composition according to the invention comprises isolated citrus fibres.

Such insoluble fibres are commercially available from suppliers like J. Rettenmaier und Söhne GmbH+Co.KG (Rosenberg, Germany) under the Vitacel™ name and Herbstreith & Fox under the Herbacel™ name. A preferred type of citrus fibres is Citrus fibre Type N from Herbafoods (Werder (Havel), Germany). Fibres normally are all insoluble. A preferred type of wheat fibre is Vitacel, as supplied by J. Rettenmaier und Söhne GmbH+Co.KG (Rosenberg, Germany).

Preferably in the finished food products, the citrus fibres have an average length of 25 to 400 micrometer, and preferably from about 50 to 185 microns, and most preferably, from about 100 to about 165 microns, including all ranges subsumed therein. The widths of such fibres are typically between about 3 to about 20 microns, and preferably, from about 5 to about 10 microns.

*Hydrophobins*

Hydrophobins are a well-defined class of proteins (Wessels, 1997, Advances in Microbial Physiology 38: 1-45; Wosten, 2001, Annual Reviews of Microbiology 55: 625-646) that are capable of self-assembly at a hydrophobic/hydrophilic interface, and having a conserved sequence:

$$X_n\text{-}C\text{-}X_{5\text{-}9}\text{-}C\text{-}C\text{-}X_{11\text{-}39}\text{-}C\text{-}X_{8\text{-}23}\text{-}C\text{-}X_{5\text{-}9}\text{-}C\text{-}C\text{-}X_{6\text{-}18}\text{-}C\text{-}X_m \qquad (3)$$

where X represents any amino acid, and n and m independently represent an integer. Typically, a hydrophobin has a length of up to 125 amino acids. The cysteine residues (C) in the conserved sequence are part of disulphide bridges. In the context of the present invention, the term hydrophobin has a wider meaning to include functionally equivalent proteins still displaying the characteristic of self-assembly at a hydrophobic-hydrophilic interface resulting in a protein film, such as proteins comprising the sequence:

$$X_n\text{-}C\text{-}X_{1\text{-}50}\text{-}C\text{-}X_{0\text{-}5}\text{-}C\text{-}X_{1\text{-}100}\text{-}C\text{-}X_{1\text{-}100}\text{-}C\text{-}X_{1\text{-}50}\text{-}C\text{-}X_{0\text{-}5}\text{-}C\text{-}X_{1\text{-}50}\text{-}C\text{-}X_m \qquad (4)$$

or parts thereof still displaying the characteristic of self-assembly at a hydrophobic-hydrophilic interface resulting in a protein film. In accordance with the definition of the present invention, self-assembly can be detected by adsorbing the protein to Teflon and using Circular Dichroism to establish the presence of a secondary structure (in general, $\alpha$-helix) (De Vocht et al., 1998, Biophys. J. 74: 2059-68).

The formation of a film can be established by incubating a Teflon sheet in the protein solution followed by at least three washes with water or buffer (Wosten et al., 1994, Embo. J. 13: 5848-54). The protein film can be visualised by any suitable method, such as labeling with a fluorescent marker or by the use of fluorescent antibodies, as is well established in the art. m and n typically have values ranging from 0 to 2000, but more usually m and n in total are less than 100 or 200. The definition of hydrophobin in the context of the present invention includes fusion proteins of a hydrophobin and another polypeptide as well as conjugates of hydrophobin and other molecules such as polysaccharides.

Hydrophobins identified to date are generally classed as either class I or class II. Both types have been identified in fungi as secreted proteins that self-assemble at hydrophobilic interfaces into amphipathic films. Assemblages of class I hydrophobins are relatively insoluble whereas those of class II hydrophobins readily dissolve in a variety of solvents.

Hydrophobin-like proteins have also been identified in filamentous bacteria, such as *Actinomycete* and *Streptomyces* sp. (WO 01/74864). These bacterial proteins, by contrast to fungal hydrophobins, form only up to one disulphide bridge since they have only two cysteine residues. Such proteins are an example of functional equivalents to hydrophobins having the consensus sequences shown in SEQ ID Nos. 1 and 2, and are within the scope of the present invention.

The hydrophobins can be obtained by extraction from native sources, such as filamentous fungi, by any suitable process. For example, hydrophobins can be obtained by culturing filamentous fungi that secrete the hydrophobin into the growth medium or by extraction from fungal mycelia with 60% ethanol. It is particularly preferred to isolate hydrophobins from host organisms that naturally secrete hydrophobins. Preferred hosts are hyphomycetes (e.g. *Trichoderma*), basidiomycetes and ascomycetes. Particularly preferred hosts are food grade organisms, such as *Cryphonectria parasitica* which secretes a hydrophobin termed cryparin (MacCabe and Van Alfen, 1999, App. Environ. Microbiol. 65: 5431-5435).

Alternatively, hydrophobins can be obtained by the use of recombinant technology. For example host cells, typically micro-organisms, may be modified to express hydrophobins and the hydrophobins can then be isolated and used in accordance with the present invention. Techniques for introducing nucleic acid constructs encoding hydrophobins into host cells are well known in the art. More than 34 genes coding for hydrophobins have been cloned, from over 16 fungal species (see for example WO96/41882 which gives the sequence of hydrophobins identified in *Agaricus bisporus;* and Wosten, 2001, Annu Rev. Microbiol. 55: 625-646). Recombinant technology can also be used to modify hydrophobin sequences or synthesise novel hydrophobins having desired/improved properties.

Typically, an appropriate host cell or organism is transformed by a nucleic acid construct that encodes the desired hydrophobin. The nucleotide sequence coding for the polypeptide can be inserted into a suitable expression vector encoding the necessary elements for transcription and translation and in such a manner that they will be expressed under appropriate conditions (e.g. in proper orientation and correct reading frame and with appropriate targeting and expression sequences). The methods required to construct these expression vectors are well known to those skilled in the art.

A number of expression systems may be used to express the polypeptide coding sequence. These include, but are not limited to, bacteria, fungi (including yeast), insect cell systems, plant cell culture systems and plants all transformed with the appropriate expression vectors. Preferred hosts are those that are considered food grade - 'generally regarded as safe' (GRAS).

Suitable fungal species, include yeasts such as (but not limited to) those of the genera *Saccharomyces, Kluy-*

*veromyces, Pichia, Hansenula, Candida, Schizo saccharomyces* and the like, and filamentous species such as (but not limited to) those of the genera *Aspergillus, Trichoderma, Mucor, Neurospora, Fusarium* and the like.

The sequences encoding the hydrophobins are preferably at least 80% identical at the amino acid level to a hydrophobin identified in nature, more preferably at least 95% or 100% identical. However, persons skilled in the art may make conservative substitutions or other amino acid changes that do not reduce the biological activity of the hydrophobin. For the purpose of the invention these hydrophobins possessing this high level of identity to a hydrophobin that naturally occurs are also embraced within the term "hydrophobins".

Hydrophobins can be purified from culture media or cellular extracts by, for example, the procedure described in WO 01/57076 which involves adsorbing the hydrophobin present in a hydrophobin-containing solution to surface and then contacting the surface with a surfactant, such as Tween 20, to elute the hydrophobin from the surface. See also Collen et al., 2002, Biochim Biophys Acta. 1569: 139-50; Calonje et al., 2002, Can. J. Microbiol. 48: 1030-4; Askolin et al., 2001, Appl Microbiol Biotechnol. 57: 124-30; and De Vries et al., 1999, Eur J Biochem. 262: 377-85.

Hydrophobins are excellent foaming agents that lead to good foamability and good foam stability of a product to which the hydrophobin is added, in products that contain water. Hydrophobins are generally rather expensive, hence the product developer has the tendency to keep the concentration of hydrophobin as low as possible. This not only leads to cost reduction, but also to saving of resources, as the production of the hydrophobin naturally costs energy.

Hydrophobins may be added to products as aqueous solution or dispersion, or may be added in dry form. In that case the hydrophobins may be freeze-dried, or may be agglomerated with a suitable material such as maltodextrin, in order to make the hydrophobin better storage stable. Such agglomerated hydrophobin may have various particle sizes.

The hydrophobin used in the present invention can be a Class I or a Class II hydrophobin, or can be a combination of a Class I and a Class II hydrophobin. Examples of class II hydrophobins are HFBI, HFBII, and cerato-ulmin. Preferably the hydrophobin comprises class II hydrophobin. Preferably the hydrophobin is in isolated form. Preferably the hydrophobin is soluble in water. Preferably the hydrophobin is a class II hydrophobin HFBII.

Preferably the concentration of hydrophobin ranges from 0.001 % to 2% by weight, preferably from 0.001% to 1% by weight. Preferably the concentration of hydrophobin is at least 0.002% by weight, preferably at least 0.003% by weight, more preferably at least 0.005% by weight based on the weight of the composition. Preferably the concentration of hydrophobin is maximally 0.3% by weight, preferably at most 0.25% by weight, preferably at most 0.1 % by weight based on the weight of the composition.

When preparing the composition of the invention, the hydrophobin may be added to the other ingredients as a solution in water. The concentration of this solution in water is preferably between 1 and 25% by weight, preferably between 1 and 15% by weight. The hydrophobins may also be added in dry form, preferably in spray dried form, or agglomerated with a suitable material such as maltodextrin.

*Food products according to the invention*

Preferably, the aerated oil-in-water emulsion of the invention is a food product. Preferably the food product is a dressing, a dairy spread, a fresh soft cheese, a mayonnaise, a light mayonnaise, an ice cream or premix for ice cream. The food products may contain any ingredient that commonly is present in such products. If the preferred food product is a dressing, or a mayonnaise or a light mayonnaise, then the preferred edible oil used in these compositions is a vegetable oil that is liquid at room temperature. Preferred oils are sunflower oil, soybean oil, rapeseed oil, and canola oil.

*Method for preparing of the composition*

In a second aspect the present invention provides a method for preparation of a composition according to the first aspect of the invention, comprising the following steps:

a) emulsifying an edible oil phase into an aqueous phase comprising egg yolk fraction, wherein the egg yolk fraction comprises protein and phospholipids at a weight ratio of at least 10:1 wt/wt and at a pH ranging from 3 to 6; and
b) mix an aerated aqueous composition comprising hydrophobin with the emulsion from step a) to create an aerated composition having an overrun of at least 1%.

Preferred aspects disclosed in the context of the first aspect of the invention, are applicable to this second aspect of the invention *mutatis mutandis.*

In step a) the emulsification may be done applying any emulsification method commonly known, for example high pressure homogenisation operated at a pressure ranging from 40 to 300 bar and 1 to 3 passes. Preferably the emulsification is done such that the average droplet size of the oil is smaller than 10 micrometer. Preferably the emulsification is done with an edible oil that is liquid at room temperature. In case the oil phase is solid or semi-solid at room temperature, the emulsification may be done at a temperature that the oil phase is liquid, for example at a temperature higher than 40°C or higher than 50°C.

In step b) an aerated composition of hydrophobin in water is provided, to be mixed with the emulsion from step a). This way an aerated product is obtained. The aeration may be done with any common means to aerate a food product, for example an aerolatte, kenwood mixer, or a BA Mixer.

The concentration of hydrophobin in the aqueous composition prior to aerating preferably ranges from 0.05% to 1% by weight of the composition, more preferred ranges from 0.1% to 0.5%, more preferred from 0.1% to 0.3%. The overrun of the aerated aqueous composition comprising hydrophobin in step b) preferably ranges from 100% to 1,000%, more preferred from 200% to 900%.

*Use of egg yolk fraction*

In a third aspect the present invention provides use of an egg yolk fraction comprising protein and phospholipids at a weight ratio of at least 10:1 wt/wt for stabilising an aerated oil-in-water emulsion composition comprising water, edible oil, and hydrophobin, having a pH ranging from 3 to 6, having an overrun of at least 1%. Preferred aspects disclosed in the context of the first or second aspect of the invention, are applicable to this third aspect of the invention *mutatis mutandis.*

**DESCRIPTION OF FIGURES**

*Figure 1*: Relative bubble size as function of time in aerated emulsions with different egg yolk fractions, from example 1 (1: emulsion #1; 2: emulsion #2; 3: emulsion #3, see Table 2).

*Figure* 2: Relative bubble size as function of time in aerated emulsions with defatted egg yolk powder or egg yolk granules, acidified to pH 3.7, from example 2.

    1 (♦ diamond): 25% oil, defatted egg yolk powder, pH 3.7
    2 (■ square): 50% oil, defatted egg yolk powder, pH 3.7
    3 (▲ triangle): 25% oil, egg yolk granules, pH 3.7
    4 (● circle): 50% oil, egg yolk granules, pH 3.7
    All four data series with linear trend lines to show the trend.

*Figure* 3: Relative bubble size as function of time in aerated emulsions with defatted egg yolk powder or egg yolk granules, not acidified, from example 2.

    1 (♦ diamond): 25% oil, defatted egg yolk powder, pH 4.7
    2 (■ square): 50% oil, defatted egg yolk powder, pH 4.7
    3 (▲ triangle): 25% oil, egg yolk granules, pH 5.4
    4 (● circle): 50% oil, egg yolk granules, pH 5.4
    All four data series with linear trend lines to show the trend.

**EXAMPLES**

The following non-limiting examples describe the present invention.

**Raw materials**

- Class II Hydrophobin HFBII ex Danisco (Copenhagen, Denmark), produced by the fungus *Trichoderma reesei,* and isolated from fermentation broth. Concentration is 13.8 wt% of HFBII in aqueous solution, pH about 4.5, buffered with ammonium salt.
- Citrus fibre Herbacel AQ plus N (ex Herbafoods Ingredients GmbH, Werder (Havel), Germany).
- Xanthan gum: Keltrol RD ex CP Kelco (Atlanta, Georgia, USA).
- Potassium sorbate: supplier Reipu Europe (Denmark);

*Egg yolk types*

*1. Egg yolk powder* ex Ovobest Eiprodukte GmbH & Co. KG (Neuenkirchen-Vörden, Germany).

*2. Heat stabilised Egg yolk* (92-8) ex Bouwhuis Enthoven (Raalte, the Netherlands). In this product the phospholipids from egg yolk are subjected to an enzymatic process using phospholipase, leading to split off of the fatty acid chains from the phospholipid molecules. The fragments are retained in the sample.

*3. Defatted Egg yolk powder* 79 ('DEYP') ex Bouwhuis Enthoven (Raalte, the Netherlands. This is a hen's egg yolk, which has been pasteurized and dried, and defatted by ethanol extraction. Chemical and physical characteristics as given by supplier: solids ≥94%, fat content ≤11% (incl. phospholipids, cholesterol, triglycerides), protein content ≥75%, ethanol ≥4%.

*4. Egg yolk granules,* prepared in house, following the procedure as described in WO 2008/080738 A1. Egg yolk granules and egg yolk plasma were isolated from undenatured hen's egg yolk. The egg yolk was obtained by the following procedure:

- break fresh eggs;
- roll the egg yolk on a tissue until all of the egg white is removed;
- puncture the egg yolk membrane with a glass pipette in order to release the egg yolk from the 'envelope';
- collect the released egg yolk in a beaker.

The plasma and granules fraction were isolated from the whole yolk so obtained by diluting the yolk with an equal amount of aqueous NaCl solution (0.17 M NaCl), followed by mild stirring for 1 hour. Next, the egg yolk suspension was centrifuged at 8,000 g and 10°C for 30 minutes. After careful decanting of the supernatant, the supernatant was centrifuged again under the same conditions. The sediments so obtained were combined and washed 4 times (1 hour under stirring) with the NaCl solution, each washing step being followed by centrifugation under the aforementioned conditions. The combined sediments obtained after centrifugation represent the granules fraction and the combined supernatants the plasma fraction.

*5. Liquid egg yolk* ex Bouwhuis Enthoven (Raalte, the Netherlands.

Characterising data of these egg yolk types are given in the following table.

*Table 1 Chemical characterisation of various egg yolk materials and fractions. Phospholipid analysis of materials (in % by weight), as determined using quantitative $^{31}$P-NMR spectroscopy:*

| | liquid egg yolk | egg yolk powder | heat stabilised egg yolk | DEYP | Egg yolk granules |
|---|---|---|---|---|---|
| moisture | 51.5% * | ≤4% * | 51.5% * | 5.8% [&] | 56.2% [&] |
| dry matter | | | | 94.2% [&] | 43.8% [&] |
| protein | 13.5% * | ≥31% * | 13.5% * | 73.3% [&] | 31.0% [&] |
| total lipids (incl. triglycerides, phospholipids, cholesterol) | 25.5% * | ≥57% * | 25.5% * | 11% * | ≤12.8% [%] |
| salt | 8% * | | 8% * | | |
| ash | | ≤4%* | | | |
| Total phospholipids *of which:* | 8.01 %[&] | | 4.06%[&] | 2.69% [&] | 5.06% [&] |
| PC (phosphatidylcholine) | 5.97% | | 0.15% | 1.67% | 3.89% |
| 1-LPC (1-lysophosphatidylcholine) | 0.03% | | 0.25% | - | 0.01% |
| 2-LPC (lysophosphatidylcholine) | 0.12% | | 2.64% | 0.05% | 0.07% |

(continued)

|  | liquid egg yolk | egg yolk powder | heat stabilised egg yolk | DEYP | Egg yolk granules |
|---|---|---|---|---|---|
| PI (phosphatidylinositol) | 0.09% |  | - | 0.37% | 0.11% |
| SPH (sphingomyelin) | 0.15% |  | 0.20% | 0.08% | 0.07% |
| PE (phosphatidylethanolamine) | 1.58% |  | 0.04% | 0.47% | 0.88% |
| LPE (lysophosphatidylethanolamine) | 0.07% |  | 0.78% | 0.03% | 0.04% |
| ratio protein / total phospholipids (wt/wt) (calculated) | 1.69 |  | 3.32 | 27.2 | 6.1 |
| ratio protein / total lipids (wt/wt) (calculated) | 0.53 | 0.54 | 0.53 | 6.66 | ≥2.4 |

\* data from supplier
& determined in house
% calculated from dry matter and protein content, the assumption is made that the maximal lipid content is the dry matter minus protein

**Methods**

*Bubble diameter*

The bubble diameter in aerated compositions is estimated using a turbiscan turbidity measurement. In principle this is a spectrophotometer that can be loaded with a glass tube containing a foam sample. Light transmitted at the tube and reflected is measured. This is translated into average bubble diameter.

Detailed procedure: sample volumes of approximately 20 mL were studied by turbidimetry using a Turbiscan Lab Expert (Formulaction, Toulouse, France). We interpret the average backscattering along the height of the foam sample with exclusion of the top and bottom parts where the backscattering is affected by edge effects. The backscattering (BS) is related to the transport mean free path ($\lambda$) of the light in the sample through:

$$BS = \frac{1}{\sqrt{\lambda}} \qquad\qquad (5)$$

In turn, the transport mean free path of light is related to the mean diameter (d) and the volume fraction ($\Phi$) of the gas bubbles through:

$$\lambda = \frac{2d}{3\Phi(1-g)Q} \qquad\qquad (6)$$

Where *g* and *Q* are optical constants given by Mie theory (G. F. Bohren and D.R.Huffman, Absorption and Scattering of Light by Small Particles. Wiley, New York, 1983). For foam dispersed in a transparent liquid, this method provides an estimate of the number average bubble size.

**Example 1 - Influence of egg yolk processing on stability of aerated light mayonnaise**

In this example the influence of egg yolk type on stability of aerated light mayonnaise using hydrophobin as stabiliser is investigated. Three types of egg yolk were tested and used, namely heat stabilised egg yolk, defatted egg yolk powder, and egg yolk powder.

The HFBII as obtained was diluted to a concentration of 0.1% by weight with demineralised water. Subsequently the mixture of HFBII in water was aerated using a Kenwood mixer to an overrun of about 700% to 800%, to yield HFBII foam.

Three oil-in-water emulsions were produced, having compositions as in Table 2. Each composition contained a different egg yolk type. The amount of egg yolk source was normalised on the protein content for each emulsion. The aerated emulsions were prepared by manually mixing the prepared emulsion with the HFBII foam.

*Table 2 Compositions of oil-in-water emulsions containing different types of egg yolk (fractions).*

|  | Emulsion #1 | Emulsion #2 (invention) | Emulsion #3 |
|---|---|---|---|
| Water | 60.29% | 64.73% | 63.20% |
| Sunflower oil | 25.0% | 25.0% | 25.0% |
| Heat-stabilised Egg yolk | 6.0% |  |  |
| Defatted egg yolk powder |  | 1.080% |  |
| Egg yolk powder |  |  | 2.613% |
| Citrus fibre Herbacel | 2.5% | 2.5% | 2.5% |
| Sugar | 1.6% | 1.6% | 1.6% |
| NaCl | 1.2% | 1.68% | 1.68% |
| Xanthan gum | 0.1% | 0.1% | 0.1% |
| potassium sorbate | 0.1% | 0.1% | 0.1% |
| EDTA | 0.008% | 0.008% | 0.008% |
| vinegar (12%) | 3.2% | 3.2% | 3.2% |

The emulsions were prepared by the following method. Disperse citrus fibre in all water, leave for 30 minutes. Homogenise this dispersion at 200 bar, it becomes a citrus fibre slurry. Disperse xanthan gum into the sunflower oil. Mix egg yolk product and all remaining powders into the citrus fibre slurry with a Silverson high shear mixer at 3,000 rpm. Add the sunflower oil - xanthan gum mix, increase speed of the Silverson mixer during this process to 6,000 rpm, and keep at 6,000 rpm for 15 minutes. Add vinegar and homogenise at 200 bar. Finally acidify to pH 3.7. Finally HFBII foam was manually mixed with the emulsions to create an volume fraction of gas of 30 vol% in each of the emulsions.

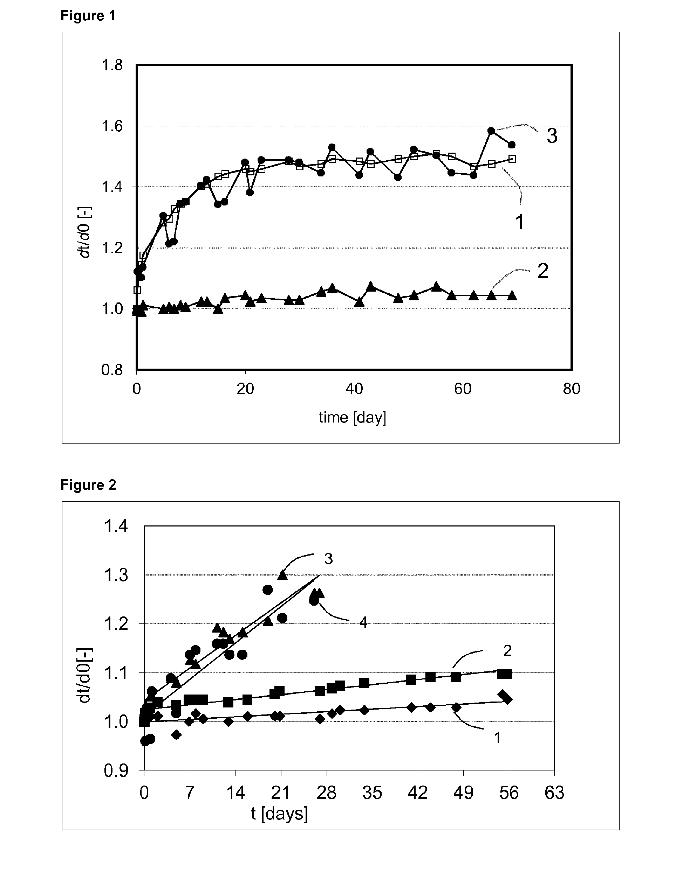

Using turbidimetry, the growth of gas bubbles in the samples during storage during a period of more than 2 months was followed. When the average size of the bubbles does not grow, then this is an indication that the aerated composition is stable. Figure 1 shows the relative bubble size d as function of time of these aerated emulsions with different egg yolk fractions. The relative bubble size is the bubble size at the measurement time ($d$t) divided by bubble size at time 0 (at the start of the storage) $d$0.  At time 0 the value is 1, and when the bubbles grow then the value will increase to a value of larger than 1. This figure shows that the emulsions #1 and #3 are not stable: the average bubble size grows rapidly. The emulsion #2 according to the invention, containing defatted egg yolk powder shows that the bubble size grows to a very limited content.

This shows that the defatted egg yolk powder is suitable to be used in these aerated emulsions containing HFBII.

**Example 2 - Stability of O/W emulsions containing defatted egg yolk versus O/W emulsions containing egg yolk granules**

In order to compare defatted egg yolk powder and egg yolk granules as disclosed in WO 2008/080738 A1, and their influence on aerated emulsions, the following experiments were conducted.

Emulsions were prepared, with the following parameters varied:

- 25% or 50% sunflower oil;
- defatted egg yolk powder or egg yolk granules, the compositions are made such that they are normalised on protein content;
- pH of the emulsion acidified to pH 3.7 or not acidified; not acidified means that the pH of the emulsions was not adjusted and was based on the ingredients in the formulation.

In total 8 emulsions were prepared and tested, and the compositions are given in Table 3. The compositions of the four emulsions that are not acidified are similar as the emulsion that are acidified, with the only difference that the acetic acid is replaced by plain water.

Table 3 Compositions of oil-in-water emulsions containing different types of egg yolk fractions.

| ingredient | DEYP 25% oil | DEYP 50% oil | EY Granules 25% oil | EY Granules 50% oil |
|---|---|---|---|---|
| acidified emulsions | | | | |
| Water | 65.84% | 38.18% | 64.37% | 36.00% |
| Egg yolk granules | | | 2.55% | 3.78% |
| Defatted egg yolk powder | 1.08% | 1.60% | | |
| Citrus Fibre AQ plus N | 2.50% | 1.67% | 2.50% | 1.67% |
| Sugar | 1.60% | 1.60% | 1.60% | 1.60% |
| NaCl | 1.68% | 1.68% | 1.68% | 1.68% |
| Xanthan gum | 0.10% | 0.07% | 0.10% | 0.07% |
| potassium sorbate | 0.10% | 0.10% | 0.10% | 0.10% |
| sunflower oil | 25.00% | 50.00% | 25.00% | 50.00% |
| Acetic acid (12%) | 2.10% | 5.10% | 2.10% | 5.10% |
| non-acidified emulsions | | | | |
| Water | 65.84% | 38.18% | 64.37% | 36.00% |
| Egg yolk granules | | | 2.55% | 3.78% |
| Defatted egg yolk powder | 1.08% | 1.60% | | |
| Citrus Fibre AQ plus N | 2.50% | 1.67% | 2.50% | 1.67% |
| Sugar | 1.60% | 1.60% | 1.60% | 1.60% |
| NaCl | 1.68% | 1.68% | 1.68% | 1.68% |
| Xanthan gum | 0.10% | 0.07% | 0.10% | 0.07% |
| potassium sorbate | 0.10% | 0.10% | 0.10% | 0.10% |
| sunflower oil | 25.00% | 50.00% | 25.00% | 50.00% |
| water | 2.10% | 5.10% | 2.10% | 5.10% |

Preparation of the emulsions was done using the same method as described in example 1. Foam was prepared from a 0.2 wt% HFBII in water, which was aerated using a Kenwood mixer at maximum speed during 10 minutes, drained for 2 hours and manually mixed into each the emulsions to reach a gas volume fraction of 30 vol%.

*Analysis of the emulsions*

Bubble growth was followed with the Turbiscan for at least 21 days. Moreover the firmness of the emulsions before aeration were determined after stabilisation at 20°C, using a typical mayonnaise grid in a Stevens penetrometer (Brookfield LFRA Texture Analyser (LFRA 1500), ex Brookfield Engineering Labs, UK) by applying a penetration test of 25 mm penetration depth at 2 mm/s penetration rate. The mayonnaise grid comprises square openings of 3x3 mm, and is made up of wire with a thickness of 1 mm. The force required is read from the digital display and is expressed in grams.
The pH of the emulsions and the hardness of the emulsions (prior to mixing in the HFBII foams) are given in Table 4. This shows that the hardness of the emulsions containing granules is higher than that of the emulsions with defatted egg yolk.

Table 4 Characteristics of emulsions (before aeration).

| oil content [wt%] | Egg yolk fraction | pH | Stevens hardness [g] |
|---|---|---|---|
| 25% | Defatted | 3.7 | 87 |
| 25% | Granules | 3.7 | 264 |
| 25% | Defatted | 4.7 | 123 |

(continued)

| oil content [wt%] | Egg yolk fraction | pH | Stevens hardness [g] |
|---|---|---|---|
| 25% | Granules | 4.7 | 238 |
| 50% | Defatted | 3.7 | 50 |
| 50% | Granules | 3.7 | 900 |
| 50% | Defatted | 5.4 | 89 |
| 50% | Granules | 5.4 | 406 |

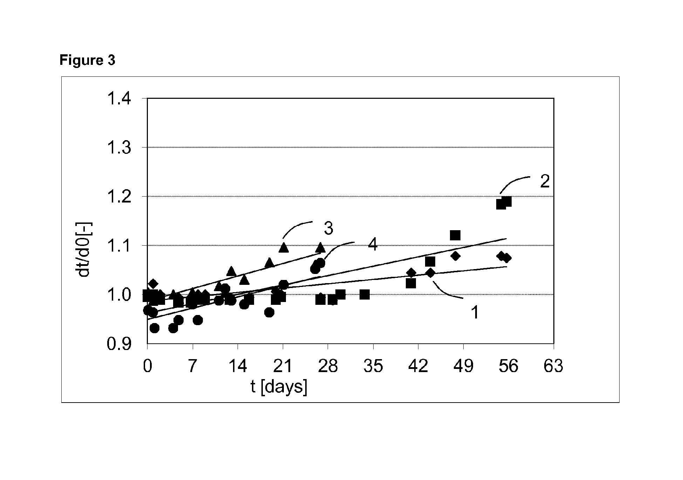

The evolution of the bubble size was followed for the emulsions, and this is shown in Figure 2 (for acidified emulsions) and Figure 3 (for non-acidified emulsions), during shelf-life in storage at 20°C. From Figure 2 it follows that the emulsions with defatted egg yolk powder (curves 1 and 2) show much less coarsening of the gas bubbles than the emulsions with egg yolk granules (curves 3 and 4). The relative bubble size $dt/d0$ of the bubbles in curves 1 and 2 increases to a lower value than the curves 3 and 4, and increase at a lower rate.

This effect is less pronounced in the non-acidified emulsions (Figure 3), nevertheless it can be observed that the decrease of the average bubble size in the emulsions with defatted egg yolk powder (curves 1 and 2) is much slower than for the emulsions with egg yolk granules (curves 3 and 4), especially for the sample with 25% oil. Also the curves 1 and 2 show a coarsening of gas bubbles, by increase of the ratio $dt/d0$ to values of about 1.1 and 1.2, respectively. Nevertheless, this increase is slower than the increase in relative bubble size for curves 3 and 4 that contain egg yolk granules.

In Figure 2 and Figure 3 the trend lines are linear curves, showing the trend in bubble size evolution.

Although the emulsions with the granules are firmer or harder than the emulsions with the defatted egg yolk powder, the stability of the aerated compositions is less of these emulsions. It can be expected that firmer emulsions may lead to more stability of gas bubbles, as due to the firmer structures it is more difficult for gas bubbles to move and coalesce or escape or the like. Nevertheless, that does not occur here, showing that the defatted egg yolk has a pronounced and positive effect on the stability of the aerated emulsion as compared to the egg yolk granules.

## Claims

1. An aerated oil-in-water emulsion composition comprising water, edible oil, egg yolk fraction, and hydrophobin, having a pH ranging from 3 to 6, wherein the composition has an overrun of at least 1%, and wherein the egg yolk fraction comprises protein and phospholipids at a weight ratio of at least 10:1 wt/wt.

2. A composition according to claim 1, wherein the egg yolk fraction comprises protein and phospholipids at a weight ratio of at least 15:1 wt/wt, preferably at least 20:1 wt/wt.

3. A composition according to claims 1 or 2, wherein the egg yolk fraction comprises protein and phospholipids at a weight ratio ranging from 20:1 to 40:1, preferably from 25:1 to 35:1, preferably from 25:1 to 30:1.

4. A composition according to any of claims 1 to 3, wherein the egg yolk fraction comprises protein and lipids at a weight ratio of at least 1:1 wt/wt, preferably at least 2:1 wt/wt.

5. A composition according to any of claims 1 to 4, wherein the total concentration of phospholipids ranges from 0.015% to 0.075%, preferably from 0.020% to 0.056%, preferably from 0.023% to 0.045% based on the weight of the composition.

6. A composition according to any of claims 1 to 5, wherein the total concentration of egg yolk protein ranges from 0.3% to 1.5%, preferably from 0.49% to 1.4%, preferably from 0.68% to 1.35% based on the weight of the composition.

7. A composition according to any of claims 1 to 6, wherein the pH ranges from 3 to 5, preferably from 3 to 4.5.

8. A composition according to any of claims 1 to 7, having an overrun of at least 3%, preferably at least 5%, preferably at least 10%, preferably at least 30%.

9. A composition according to any of claims 1 to 8, wherein at least 50% of the gas bubbles has a volume based equivalent diameter of maximally 1,000 micrometer.

10. A composition according to any of claims 1 to 9, wherein the amount of edible oil ranges from 5% to 90% by weight of the composition, preferably from 20% to 70% by weight of the composition.

11. A composition according to any of claims 1 to 10, wherein the hydrophobin comprises class II hydrophobin.

12. A composition according to any of claims 1 to 11, wherein the concentration of hydrophobin ranges from 0.001% to 2% by weight, preferably from 0.001% to 1% by weight.

13. A method for preparation of a composition according to any of claims 1 to 12, comprising the following steps:

    a) emulsifying an edible oil phase into an aqueous phase comprising egg yolk fraction, wherein the egg yolk fraction comprises protein and phospholipids at a weight ratio of at least 10:1 wt/wt and at a pH ranging from 3 to 6; and
    b) mix an aerated aqueous composition comprising hydrophobin with the emulsion from step a) to create an aerated composition having an overrun of at least 1%.

14. Use of an egg yolk fraction comprising protein and phospholipids at a weight ratio of at least 10:1 wt/wt for stabilising an aerated oil-in-water emulsion composition comprising water, edible oil, and hydrophobin, having a pH ranging from 3 to 6, having an overrun of at least 1%.

**Figure 1**

**Figure 2**

**Figure 3**

Europäisches
Patentamt

European
Patent Office

Office européen
des brevets

## EUROPEAN SEARCH REPORT

Application Number

EP 12 17 9668

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2007/087968 A1 (UNILEVER PLC [GB]; UNILEVER NV [NL]; LEVER HINDUSTAN LTD [IN]; COX AND) 9 August 2007 (2007-08-09) * page 10, line 19 - page 11, line 7; claim 1; examples 5,6 * | 1-14 | INV. A23L1/24 A23L1/39 A23L1/48 A23L1/00 A23P1/16 |
| X | EP 2 266 404 A1 (UNILEVER PLC A COMPANY REGISTERED IN ENGLAND AND WALES UNDER COMPANY N) 29 December 2010 (2010-12-29) * paragraphs [0002], [0030] - [0038]; claim 1; example 1 * | 1-14 | |
| A,D | WO 2010/136355 A1 (UNILEVER PLC [GB]; UNILEVER NV [NL]; UNILEVER HINDUSTAN [IN]; COX ANDR) 2 December 2010 (2010-12-02) * the whole document * | 1-14 | |
| A,D | WO 2008/080738 A1 (UNILEVER NV [NL]; UNILEVER PLC [GB]; UNILEVER HINDUSTAN [IN]; ANTON MA) 10 July 2008 (2008-07-10) * the whole document * | 1-14 | |
| A,D | WO 2008/138772 A1 (UNILEVER PLC [GB]; UNILEVER NV [NL]; UNILEVER HINDUSTAN [IN]; BIALEK J) 20 November 2008 (2008-11-20) * the whole document * | 1-14 | TECHNICAL FIELDS SEARCHED (IPC) A23L A23D A23P |
| A | WO 2008/116733 A1 (UNILEVER NV [NL]; UNILEVER PLC [GB]; UNILEVER HINDUSTAN [IN]; COX ANDR) 2 October 2008 (2008-10-02) * the whole document * | 1-14 | |

The present search report has been drawn up for all claims

| Place of search | Date of completion of the search | Examiner |
|---|---|---|
| The Hague | 28 January 2013 | Tallgren, Antti |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 17 9668

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2013

| Patent document cited in search report | | Publication date | Patent family member(s) | | Publication date |
|---|---|---|---|---|---|
| WO 2007087968 | A1 | 09-08-2007 | AT | 484199 T | 15-10-2010 |
| | | | AU | 2007211713 A1 | 09-08-2007 |
| | | | CA | 2617548 A1 | 09-08-2007 |
| | | | CN | 101374423 A | 25-02-2009 |
| | | | EP | 1978824 A1 | 15-10-2008 |
| | | | ES | 2351479 T3 | 07-02-2011 |
| | | | JP | 4976423 B2 | 18-07-2012 |
| | | | JP | 2009525026 A | 09-07-2009 |
| | | | MY | 143739 A | 15-07-2011 |
| | | | NZ | 565855 A | 28-01-2011 |
| | | | PT | 1978824 E | 21-12-2010 |
| | | | US | 2008175972 A1 | 24-07-2008 |
| | | | WO | 2007087968 A1 | 09-08-2007 |
| | | | ZA | 200802445 A | 30-09-2009 |
| EP 2266404 | A1 | 29-12-2010 | AU | 2010202201 A1 | 16-12-2010 |
| | | | AU | 2010202204 A1 | 16-12-2010 |
| | | | CA | 2704702 A1 | 02-12-2010 |
| | | | CA | 2705882 A1 | 02-12-2010 |
| | | | CN | 101919424 A | 22-12-2010 |
| | | | CN | 101919428 A | 22-12-2010 |
| | | | EA | 201000741 A1 | 28-02-2011 |
| | | | EA | 201000742 A1 | 28-02-2011 |
| | | | EP | 2266404 A1 | 29-12-2010 |
| | | | EP | 2266406 A1 | 29-12-2010 |
| | | | US | 2010303987 A1 | 02-12-2010 |
| | | | US | 2011081446 A1 | 07-04-2011 |
| WO 2010136355 | A1 | 02-12-2010 | AU | 2010252108 A1 | 15-12-2011 |
| | | | CA | 2763374 A1 | 02-12-2010 |
| | | | CN | 102448313 A | 09-05-2012 |
| | | | EP | 2434901 A1 | 04-04-2012 |
| | | | JP | 2012527872 A | 12-11-2012 |
| | | | US | 2010303998 A1 | 02-12-2010 |
| | | | WO | 2010136355 A1 | 02-12-2010 |
| WO 2008080738 | A1 | 10-07-2008 | AU | 2007341458 A1 | 10-07-2008 |
| | | | CA | 2672381 A1 | 10-07-2008 |
| | | | CN | 101573039 A | 04-11-2009 |
| | | | EP | 2094097 A1 | 02-09-2009 |
| | | | RU | 2009128995 A | 10-02-2011 |
| | | | US | 2008268131 A1 | 30-10-2008 |
| | | | WO | 2008080738 A1 | 10-07-2008 |
| | | | ZA | 200904101 A | 25-08-2010 |
| WO 2008138772 | A1 | 20-11-2008 | AT | 487386 T | 15-11-2010 |

EPO FORM P0459

For more details about this annex : see Official Journal of the European Patent Office, No. 12/82

**ANNEX TO THE EUROPEAN SEARCH REPORT**
**ON EUROPEAN PATENT APPLICATION NO.**                    EP 12 17 9668

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2013

| Patent document cited in search report | Publication date | Patent family member(s) | Publication date |
|---|---|---|---|
| | | AU    2008250359 A1 | 20-11-2008 |
| | | CA    2686963 A1 | 20-11-2008 |
| | | CN    101686703 A | 31-03-2010 |
| | | EA    200971040 A1 | 30-04-2010 |
| | | EP    2144511 A1 | 20-01-2010 |
| | | ES    2352868 T3 | 23-02-2011 |
| | | PT    2144511 E | 22-11-2010 |
| | | US    2008286432 A1 | 20-11-2008 |
| | | WO    2008138772 A1 | 20-11-2008 |
| WO 2008116733    A1 | 02-10-2008 | AU    2008231955 A1 | 02-10-2008 |
| | | CA    2681388 A1 | 02-10-2008 |
| | | CN    101652076 A | 17-02-2010 |
| | | EP    2129238 A1 | 09-12-2009 |
| | | US    2010112179 A1 | 06-05-2010 |
| | | WO    2008116733 A1 | 02-10-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006010425 A1
- WO 2007039064 A1
- WO 2007087968 A1
- EP 2052628 A1
- WO 2010136354 A1
- WO 2010136355 A1

- WO 2008080737 A1
- WO 2008080738 A1
- WO 2008138772 A1
- WO 0174864 A
- WO 9641882 A
- WO 0157076 A

**Non-patent literature cited in the description**

- **PARASKEVOPOULOU et al.** *Food Hydrocolloids,* 1995, vol. 9 (3), 205-209
- **PARASKEVOPOULOU et al.** *Food Hydrocolloids,* 1997, vol. 11 (4), 385-391
- **DYER-HURDON et al.** *Journal of Food Science,* 1993, vol. 58 (6), 1277-1281
- **WESSELS.** *Advances in Microbial Physiology,* 1997, vol. 38, 1-45
- **WOSTEN.** *Annual Reviews of Microbiology,* 2001, vol. 55, 625-646
- **DE VOCHT et al.** *Biophys. J.,* 1998, vol. 74, 2059-68
- **WOSTEN et al.** *Embo. J.,* 1994, vol. 13, 5848-54

- **MACCABE ; VAN ALFEN.** *App. Environ. Microbiol.,* 1999, vol. 65, 5431-5435
- **WOSTEN.** *Annu Rev. Microbiol.,* 2001, vol. 55, 625-646
- **COLLEN et al.** *Biochim Biophys Acta,* 2002, vol. 1569, 139-50
- **CALONJE et al.** *Can. J. Microbiol.,* 2002, vol. 48, 1030-4
- **ASKOLIN et al.** *Appl Microbiol Biotechnol.,* 2001, vol. 57, 124-30
- **DE VRIES et al.** *Eur J Biochem.,* 1999, vol. 262, 377-85
- **G. F. BOHREN ; D.R.HUFFMAN.** Absorption and Scattering of Light by Small Particles. Wiley, 1983